# EUROPEAN PATENT APPLICATION

(11) **EP 2 560 173 A1**
(43) Date of publication of application: **20.02.2013**
(21) Application number: 11768589.1
(22) Date of filing: 30.03.2011
(51) Int. Cl.: G21C 15/16, B01D 45/12, F22B 37/32

(54) **GAS-WATER SEPARATOR AND NUCLEAR REACTOR SYSTEM USING SAME**

(30) Priority: 13.04.2010 JP 2010091868; 13.04.2010 JP 2010091869
(71) Applicant: Kabushiki Kaisha Toshiba, Minato-ku Tokyo 105-8001 (JP)
(72) Inventor: IKEDA, Hiroshi, Tokyo 105-8001 (JP); IWAKI, Chikako, Tokyo 105-8001 (JP); SATO, Hisaki, Tokyo 105-8001 (JP); AOKI, Kazuyoshi, Tokyo 105-8001 (JP)
(74) Representative: Granleese, Rhian Jane
(86) International application number: PCT/JP2011/001903
(87) International publication number: WO 2011/129063

(57) **Abstract**

A steam separator is provided with a barrel (2), a swirler (8), a pick-off ring (1), a steam collecting pipe (29) and transverse pipes (11). A two-phase flow of steam and water ascends inside the barrel (2). The two-phase flow has a swirl force imparted by the swirler (8). Flow (43) near the inner surface of the barrel (2) is separated by the pick-off ring (1), etc. from flow (4) near the center of the barrel (2) and is guided so as to descend along the outer surface of the barrel (2). A major part of the flow (4) near the center of the barrel (2) is separated from the outside flow by the steam collecting pipe (29) and guided to the outside of the barrel (2) through the transverse pipes (11).

## Description

### TECHNICAL FIELD

The present invention relates to a steam separator and a nuclear reactor system using the same.

### BACKGROUND ART

A boiling water nuclear reactor generates steam by utilizing heat generated from a core and rotates a turbine and a power generator by means of the steam. In a pressurized water nuclear reactor, cooling water separately flows into a primary cooling system circulating through the nuclear reactor, and a secondary cooling system serving as a steam generator. In the primary cooling system, high-temperature water is generated by the heat generated from the nuclear reactor core. In the secondary cooling system, water in the secondary cooling system is boiled in a heat exchanger in the steam generator to become steam, which rotates a turbine or a power generator.

It is necessary to remove moisture from the steam to be supplied to the turbine. To this end, a typical reactor is provided with a plurality of steam separators, driers, and the like so as to remove water from two-phase flow of steam and water generated in the nuclear reactor or the steam generator.

A flow of water and steam in a typical boiling water nuclear reactor will be described. A core including a large number of fuel assemblies is formed inside a reactor pressure vessel at a portion slightly below a center portion thereof. The upper end opening of a shroud surrounding the core is closed by a shroud head. Stand pipes of steam separators are vertically arranged on the shroud head, and driers are provided above the steam separators.

Water guided to the reactor pressure vessel through feed water pipes enters inside of the core from the lower portion of the shroud. The water is boiled by heat energy of the core to generate two-phase flow of water and steam in the stand pipe portion. Each of the steam separators includes the stand pipe, a swirler, a barrel, and the like and is configured to centrifugally separate the water in the swirler portion and the barrel portion.

The centrifugally separated water is guided underwater and re-circulates in the reactor pressure vessel together with water flowing in the reactor pressure vessel through the feed water pipes. On the other hand, the steam from which most of liquid water has been removed by the steam separators is further moisture removed by the driers. The steam from which the moisture has been removed is guided outside the reactor pressure vessel through main steam pipes and is then supplied to the turbine.

The centrifugal force caused by the swirler causes water having a high density to form a liquid film on the inner surface of the barrel, and mainly the steam flows in the barrel center portion. The liquid film is scooped out by a pick-off ring formed so as to protrude in the barrel to be discharged to a water discharge pipe formed around the outer periphery of the barrel. The liquid film discharged to the water discharge pipe flows down therethrough to be discharged to water surface around the steam separator. Some minute droplets ascend inside the barrel together with the steam.

### PRIOR ART DOCUMENTS

### PATENT DOCUMENTS

PATENT DOCUMENT 1: Japanese Patent Application Laid-Open Publication No. 2003-329793
PATENT DOCUMENT 2: Japanese Patent Application Laid-Open Publication No. 11-141803
PATENT DOCUMENT 3: Japanese Patent Application Laid-Open Publication No. 2000-153118

### SUMMARY OF THE INVENTION

### PROBLEMS TO BE SOLVED BY THE INVENTION

In a conventional steam separator, even if the water separated from the two-phase flow that has flowed in the steam separator is discharged outside the barrel through the water discharge pipe, most of the steam flows out from the upper part of the barrel. Therefore, if the steam flow velocity is high, the number of the minute droplets that are carried by the steam is increased, which may result in an increase in carry-over.

An object of the present invention is, therefore, to reduce the carry-over of droplets to be discharged from the upper end of the barrel of the steam separator.

### MEANS FOR SOLVING THE PROBLEM

In order to achieve the objective described above, according to an aspect of the present invention, there is provided a steam separator comprising: a barrel which is formed in a vertical tubular shape and inside which two-phase flow of steam and water flows upward; a swirler which imparts a swirling force to the two-phase flow; and a steam separation structure which separates the flow in the barrel into a flow around a center of the barrel and a flow around an inner surface of the barrel and guides the flow around the center outside the barrel.

According to another aspect of the present invention, there is provided a nuclear reactor system comprising: steam generation means for heating water by heat generated by nuclear fission to generate steam; and a steam separator including: a barrel which is formed in a vertical tubular shape and inside which two-phase flow of steam and water sent from the steam generation means flows upward; a swirler which imparts a swirling force to the two-phase flow; and a steam separation structure which separates the flow in the barrel into a flow around a center of the barrel and a flow around an inner surface of the barrel and guides the flow around the center outside the barrel.

### ADVANTAGES OF THE INVENTION

According to the present invention, it is possible to reduce the carry-over of droplets to be discharged from the upper end of the barrel of the steam separator.

### BRIEF DESCRIPTION OF THE DRAWINGS

FIG. 1 is an elevational cross sectional view illustrating, in an enlarged manner, a part of a steam separator according to a first embodiment of the present invention.
FIG. 2 is a cross sectional view taken along line II-II of FIG. 1 as viewed in the direction of the arrows.
FIG. 3 is a cross sectional view taken along line III-III of FIG. 1 as viewed in the direction of the arrows.
FIG. 4 is an elevational cross sectional view of a nuclear reactor system using the first embodiment of the steam separator according to the present invention.
FIG. 5 is an elevational cross sectional view illustrating, in an enlarged manner, a part of the steam separator according to a second embodiment of the present invention.
FIG. 6 is an elevational cross sectional view illustrating, in an enlarged manner, a part of the steam separator according to a third embodiment of the present invention.
FIG. 7 is an elevational cross sectional view illustrating, in an enlarged manner, a part of the steam separator according to a modification of the third embodiment of the present invention.
FIG. 8 is an elevational cross sectional view illustrating, in an enlarged manner, a part of the steam separator according to another modification of the third embodiment of the present invention.
FIG. 9 is an elevational cross sectional view illustrating, in an enlarged manner, a part of the steam separator according to a fourth embodiment of the present invention.
FIG. 10 is an elevational cross sectional view illustrating, in an enlarged manner, a part of the steam separator according to a modification of the fourth embodiment of the present invention.
FIG. 11 is an elevational cross sectional view illustrating, in an enlarged manner, a part of the steam separator according to a modification of the second embodiment or third embodiment of the present invention.
FIG. 12 is an elevational cross sectional view illustrating, in an enlarged manner, a part of the steam separator according to another modification of the second or third embodiment of the present invention.
FIG. 13 is an elevational cross sectional view illustrating, in an enlarged manner, a part of the steam separator according to still another modification of the second or third embodiment of the present invention.

### EMBODIMENTS FOR CARRYING OUT THE INVENTION

Embodiments of a steam separator according to the present invention will be described with reference to the accompanying drawings. The same reference numerals are used to designate the same or similar components, and redundant descriptions thereof are omitted. Further, the following embodiments are merely illustrative and the present invention is not limited thereto.

### [FIRST EMBODIMENT]

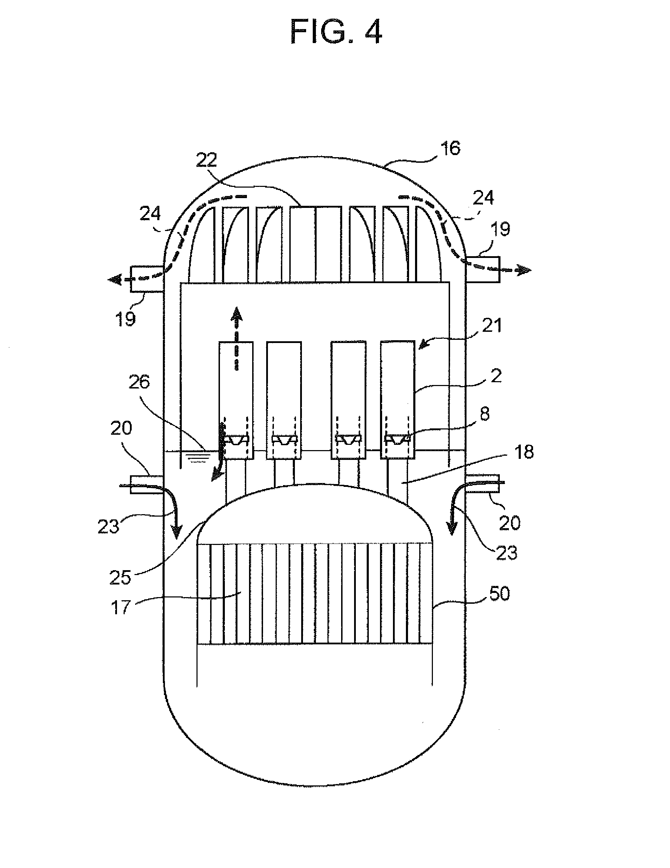

FIG. 4 is an elevational cross sectional view of a nuclear reactor system using a first embodiment of a steam separator according to the present invention.

The nuclear reactor system has a reactor pressure vessel 16. The reactor pressure vessel 16 is connected with feed water pipes 20 and main steam pipes 19. The reactor pressure vessel 16 has inside thereof a shroud 50, steam separators 21, and driers 22.

The shroud 50 is a cylindrical member provided at a portion slightly below the center portion of the reactor pressure vessel 16. The shroud 50 houses a large number of fuel assemblies which constitute a core 17.

The upper end opening of the shroud 50 is closed by a shroud head 25. Stand pipes 18 of the steam separators 21 are vertically arranged on the shroud head 25. Driers 22 are provided above the steam separators 21.

The water flow 23 and the steam flow 24 will be described. Water guided to the reactor pressure vessel 16 through the feed water pipes 20 enters the core 17 from the lower portion of the shroud 50. The water is boiled by heat energy of the core 17 to generate two-phase flow of water and steam in the stand pipe 18 portions. That is, the core 17 constituted by a large number of the fuel assemblies functions as a steam generation means that heats the water by heat generated by nuclear fission to generate steam.

Each of the steam separators 21 includes a stand pipe 18, a swirler 8, a barrel 2, and the like. The swirler 8 imparts a swirling force to the two phase flow of water and steam flowing from the stand pipe 18 to the barrel 2. The steam separator 21 uses the swirling force imparted by the swirler 8 to centrifugally separate water in the barrel 2 portion. The centrifugally separated water is guided below a water surface 26 and re-circulates in the reactor pressure vessel 16 together with water flowing in the reactor pressure vessel 16 through the feed water pipes 20.

The steam from which most of water has been removed by the steam separators 21 is further moisture removed by the driers 22. The steam from which the moisture has been removed is guided outside the reactor pressure vessel 16 through the main steam pipes 19 and is then supplied to the turbine.

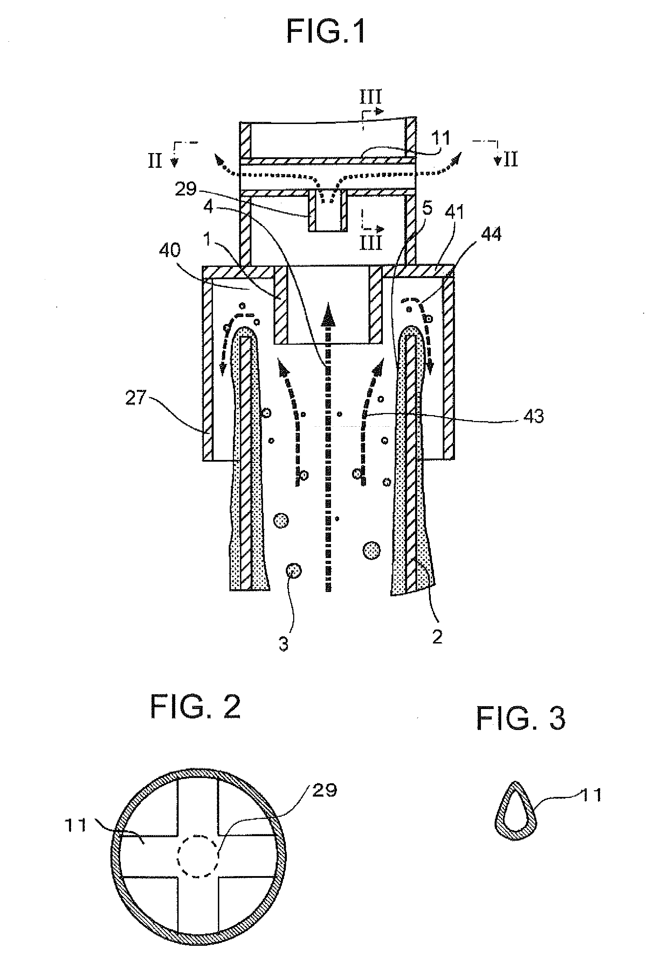

FIG. 1 is an elevational cross sectional view illustrating a part of the steam separator according to the present embodiment in an enlarged manner.

The steam separator 21 includes a barrel 2, a swirler 8, a pick-off ring 1, an annular body 41, and a descending flow path formation pipe 27. The barrel 2 is a cylindrical pipe extending vertically. Inside the barrel 2, the two-phase flow of steam and water that has flowed through the stand pipe 18 and has received the swirling force from the swirler 8 flows upward. Water to which the centrifugal force has been applied by the swirler 8 forms a liquid film 5 on an inner surface of the barrel 2. Water that is not taken in the liquid film 5 exists as droplets 3. The barrel 2 has, e.g., two same diameter circular pipes arranged spaced apart from each other in an axial direction to form a penetrating portion 40 penetrating through the barrel 2 from outside to inside.

The pick-off ring 1 is a pipe having an outer surface opposed to the penetrating portion 40 of the barrel 2 across a gap. The annular body 41 is an annular plate extending outward from the outer surface of the pick-off ring 1. The descending flow path formation pipe 27 is a pipe extending downward from the annular body 41. The inner surface of the descending flow path formation pipe 27 is opposed to the outer surface of the barrel 2 across a gap.

The pick-off ring 1 and the descending flow path formation pipe 27 are each formed in a hollow cylindrical shape and each arranged coaxially with the barrel 2. The diameter of the pick-off ring 1 is smaller than that of the barrel 2. The diameter of the descending flow path formation pipe 27 is larger than that of the barrel 2. The annular body 41 is a ring having a center axis coaxial with the axis of the barrel 2 and has an inner diameter equal to the diameter of the pick-off ring 1 and an outer diameter equal to the diameter of the descending flow path formation pipe 27.

A flow 43 around the inner surface of the barrel 2 is separated from the flow 4 around the center of the barrel 2 by the pick-off ring 1, the annular body 41 and the descending flow path formation pipe 27, so as to be guided to descend along the outer surface of the barrel 2.

The pick-off ring 1, the descending flow path formation pipe 27, the annular body 41, and the upper part of the barrel 2 located above the annular body 41 are supported, for example, by fixing plates fixed to the outer surface of the lower part of the barrel 2 which is located below the annular body 41 so as to protrude in radial directions to the inner surface of the descending flow path formation pipe 27.

The water to which the centrifugal force has been applied by the swirler 8 forms the liquid film 5 on the inner surface of the barrel 2. On the other hand, mainly steam flows around the center of the barrel 2. The liquid film 5 is removed outside the barrel 2 by the pick-off ring 1 and the like.

The steam separator 21 according to the present embodiment further has a steam separating structure. The steam separating structure includes a steam collecting pipe 29 and transverse pipes 11.

The steam collecting pipe 29 is a pipe having an outer surface opposed to the inner surface of the barrel 2 located above the pick-off ring 1 across a gap. The transverse pipes 11 are pipes that make the inside of the steam collecting pipe 29 and the outside of the barrel 2 communicate with each other.

The steam collecting pipe 29 is a circular pipe having a diameter smaller than that of the pick-off ring 1. The steam collecting pipe 29 is arranged coaxially with the barrel 2, the pick-off ring 1, and the like. The lower end of the steam collecting pipe 29 is opened, and the upper end thereof communicates with the transverse pipes 11.

The transverse pipes 11 are circular pipes that pass through the inside of the barrel 2, and both end portions of each of the transverse pipes 11 are fixed to the barrel 2. An opening is formed in a part of the side surface of each of the transverse pipes 11, and a portion around the opening is connected with the upper end of the steam collecting pipe 29. The number of the transverse pipes 11 may be one or two or more.

FIG. 2 is a cross sectional view taken along line II-II of FIG. 1 as viewed in the direction of the arrows. Although the transverse pipes 11 extend in four directions from the steam collecting pipe 29 to be connected to the barrel 2 in the example of FIG. 2, the transverse pipes 11 may extend in three or less directions or five or more directions.

FIG. 3 is a cross sectional view taken along line III-III of FIG. 1 as viewed in the direction of the arrows. The cross sectional shape of the transverse pipes 11 is not especially limited but is preferably a streamline shape as illustrated in FIG. 3 so as not to interfere with passage of the steam flow.

By the above steam collecting pipe 29, the flow above the pick-off ring 1 in the barrel 2, that is, the flow on the downstream side is separated into a flow around the center of the barrel 2 and a flow around the inner surface 2 of the barrel. Then, the flow around the center of the barrel 2 passes the steam collecting pipe 29 and transverse pipes 11 to be guided outside the barrel 2.

In the above steam separator, the steam flowing around the center of the barrel 2 can be discharged through the transverse pipes 11 to thereby reduce the rate of the flow that ascends in the barrel 2. As a result, the steam flow rate in the barrel 2 after passing through the pick-off ring is reduced. Accordingly, the flow velocity of the steam ascending in the barrel 2 is reduced. The reduction in the steam velocity ascending in the barrel 2 reduces the amount of droplets carried upward to thereby reduce carry-over.

That is, even if the steam flow rate in the entire plant increases due to an increase in thermal power of the nuclear reactor, an increase in the steam velocity in the barrel 2 can be suppressed or reduced. As a result, it is possible to increase the steam flow rate in the entire plant without increasing carry-over.

According to the present embodiment, the carry-over of droplets to be discharged from the upper end of the barrel of the steam separator can be reduced.

### [SECOND EMBODIMENT]

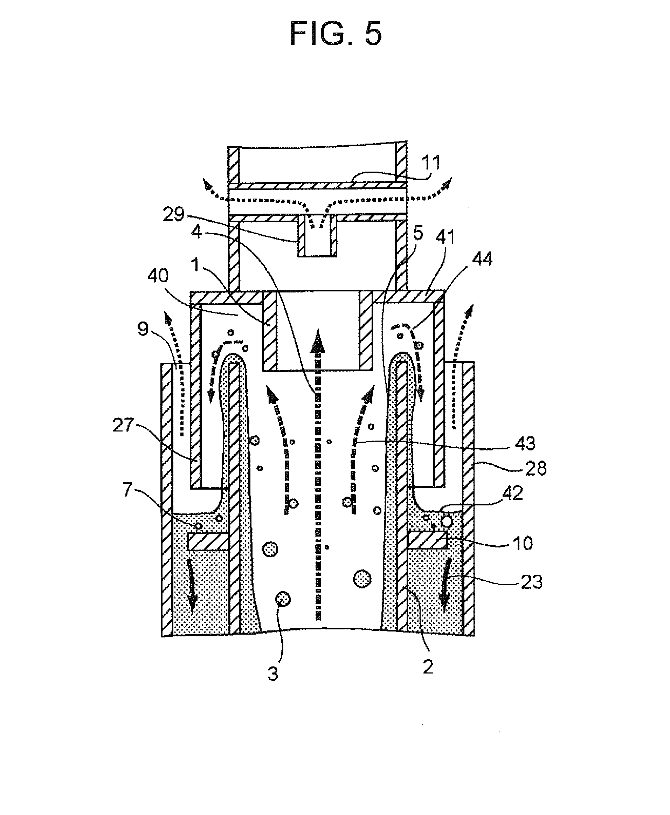

FIG. 5 is an elevational cross sectional view illustrating, in an enlarged manner, a part of the steam separator according to a second embodiment of the present invention.

The steam separator according to the present embodiment differs from that of the first embodiment in that a water discharge pipe 28 and a flow path control ring 10 are additionally provided as components thereof.

The water discharge pipe 28 is a pipe having an inner surface opposed to the outer surface of the barrel 2 across a gap. The flow path control ring 10 protrudes from the outer surface of the barrel 2 toward the inner surface of the water discharge pipe 28 to interfere with the flow path between the barrel 2 and the water discharge pipe 28.

The water discharge pipe 28 is formed in a hollow cylindrical shape and arranged coaxially with the barrel 2. The diameter of the water discharge pipe 28 is larger than that of the descending flow path formation pipe 27. The flow path control ring 10 has an inner diameter equal to the outer diameter of the barrel 2 and an outer diameter smaller than the inner diameter of the water discharge pipe 28.

The upper end of the water discharge pipe 28 is positioned above the lower end of the descending flow path formation pipe 27. The flow path control ring 10 is positioned below the lower end of the descending flow path formation pipe 27.

The water discharge pipe 28 and the flow path control ring 10 constitute a water discharge flow path into which a flow 44 descending along the outer surface of the barrel 2 flows. Further, the flow path control ring 10 forms, in the middle of the water discharge pipe, a small flow path area having a cross sectional area smaller than that of a portion thereabove. The water discharge pipe 28 has a diameter larger than that of the descending flow path formation pipe 27, so that an opening is formed at the upper end of the water discharge pipe 28 positioned above the small flow path area.

The water discharge pipe 28 is supported by fixing plates fixed to the outer surface of the barrel 2 so as to protrude in radial directions to the inner surface of the water discharge pipe 28.

In the present embodiment, the water is removed into the water discharge pipe 28 by the pick-off ring 10 and the like. However, under high steam-quality conditions, steam also flows into the water discharge pipe 28 together with the water. The width of the flow path in the water discharge pipe 28 is reduced by the flow path control ring 10. Thus, the flow path above the flow path control ring 10 is filled with water to form a water surface 42 above the flow path control ring 10. As a result, the steam that has flowed into the water discharge pipe 28 is discharged through the upper end opening thereof. Even if bubbles 7 are generated below the water surface 42 in the water discharge pipe 28, most of the bubbles 7, which are lightweight, ascend to reach a portion above the water surface 42 in the water discharge pipe 28 to be discharged through the upper end opening of the water discharge pipe 28.

As described above, according to the present embodiment, most of the steam that has flowed into the water discharge pipe 28 does not descend in the water discharge pipe 28 but is discharged, so that an amount of steam in the water that descends in the water discharge pipe 28, which is "carry-under", is reduced. Since the reduction in the carry-under does not result from a reduction in an amount of fluid to be guided outside the barrel 2 which is brought about by an increase in the diameter of the pick-off ring 1 or the like, an amount of the droplets ascending in the barrel 2, which is "carry-over", is not increased. Further, the flow of the steam is reversed at the lower end of the descending flow path formation pipe 27 toward the upper end opening of the water discharge pipe 28, suppressing the droplets from ascending.

### [THIRD EMBODIMENT]

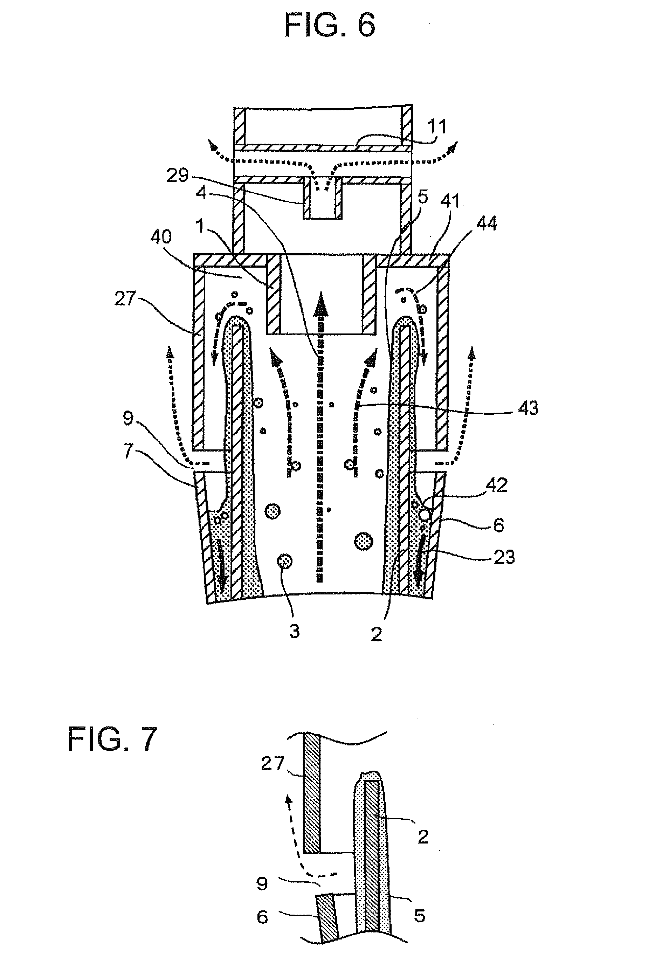

FIG. 6 is an elevational cross sectional view illustrating, in an enlarged manner, a part of the steam separator according to a third embodiment of the present invention.

The steam separator 21 according to the present embodiment has, in place of the water discharge pipe 28 and the flow path control ring 10 of the second embodiment, a water discharge pipe 6 having a diameter reduced downward. The diameter of the water discharge pipe 6 is reduced downward and, accordingly, a cross sectional area of the water discharge flow path between the inner surface of the water discharge pipe 6 and the outer surface of the barrel 2 is reduced downward.

A gap 9 is formed between the upper end of the water discharge pipe 6 and the descending flow path formation pipe 27. This gap 9 serves as a steam outlet. Alternatively, in a case where the descending flow path formation pipe 27 and the water discharge pipe 6 are integrally formed as a single pipe, holes penetrating the single pipe from inside to outside may be formed as the steam outlets.

In the third embodiment, similar to the second embodiment, a portion at which the sectional area of the water discharge flow path is reduced is formed, so that the water surface 42 is formed above the sectional area reduced portion. As a result, the steam that has flowed into the water discharge pipe 28 is discharged through the upper end opening thereof. Even if the bubbles 7 are generated below the water surface 42 in the water discharge pipe 28, most of the bubbles 7, which are lightweight, ascend to reach a portion above the water surface 42 in the water discharge pipe 28 to be discharged through the upper end opening of the water discharge pipe 28.

As described above, according to the present embodiment, most of the steam that has flowed into the water discharge pipe 28 does not descend in the water discharge pipe 28 but is discharged, so that the amount of the steam in the water that descends in the water discharge pipe 28, which is "carry-under", is reduced. Since the reduction in the carry-under does not result from a reduction in the amount of fluid to be guided outside the barrel 2 which is brought about by an increase in the diameter of the pick-off ring 1 or the like, the amount of the droplets ascending in the barrel 2, which is "carry-over", is not increased. Further, the flow of the steam is reversed around the steam outlet toward the upper end opening of the water discharge pipe 28, suppressing the droplets from ascending.

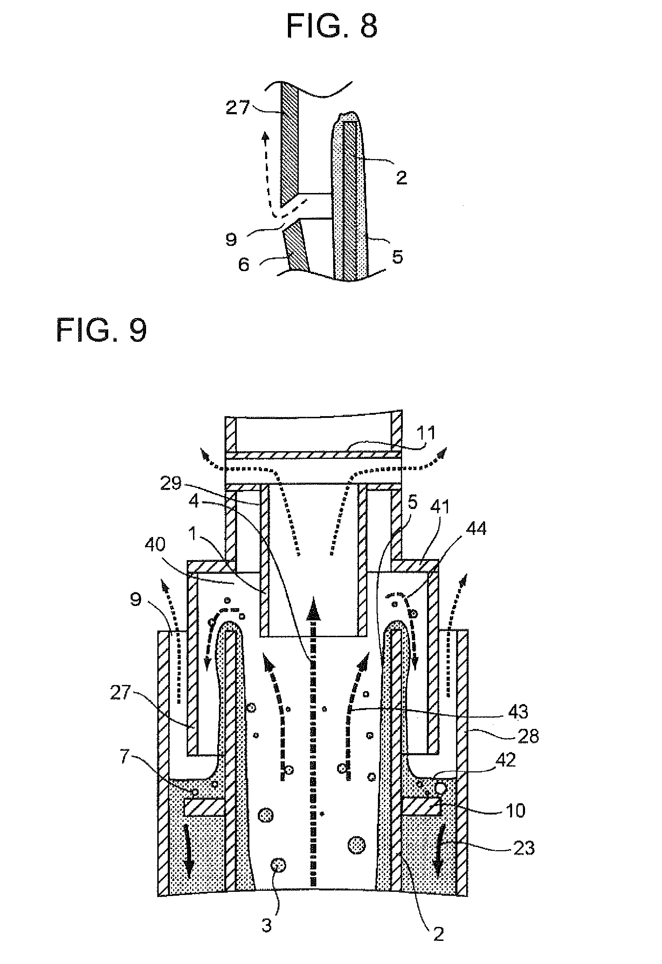

Further, the gap 9 is opened in the horizontal direction, so that in a case where a configuration in which the water is discharged outside the steam separator at a portion above the annular body 41 is adopted, it is possible to prevent water falling from above the annular body 41 from flowing into the gap 9. Further, by adopting, as a configuration preventing the water from the steam outlet from flowing into the water discharge flow path, a configuration illustrated in FIG. 7 in which the upper end of the water discharge pipe 6 is smaller in diameter than the lower end of the descending flow path formation pipe 27, it is possible to prevent the water from flowing into the gap 9 more effectively. Similarly, by adopting a configuration illustrated in FIG. 8 in which the gap 9 is inclined downward toward the outer periphery, it is possible to prevent the water from flowing into the gap 9 more effectively.

### [FOURTH EMBODIMENT]

FIG. 9 is an elevational cross sectional view illustrating, in an enlarged manner, a part of the steam separator according to a fourth embodiment of the present invention.

The steam separator 21 according to the present embodiment has a steam collecting pipe 29 constituting a part of a droplet separation structure. The steam collecting pipe 29 of the present embodiment is connected to the transverse pipes 11. The pick-off ring 1 in the second embodiment is not provided.

The steam collecting pipe 29 of the present embodiment has an outer surface opposed to the penetrating portion 40 of the barrel 2. The steam collecting pipe 29 is a circular pipe having a diameter smaller than that of the barrel 2 and arranged coaxially with the barrel 2. The lower end of the steam collecting pipe 29 is opened, and the upper end thereof is connected to the transverse pipes 11.

The outside flow in the steam collecting pipe 29 passes outside of the transverse pipes 11 and goes upward. However, most of droplets having a velocity component in the outward direction is guided by the liquid film 5 formed on the inner surface of the barrel 2 and by the centrifugal force, so as to pass through the penetrating portion 40 of the barrel 2 to the outside of the barrel 2. The water and the steam that have been guided outside the barrel 2 are then guided by the descending flow path formation pipe 27 so as to descend along the outer surface of the barrel 2.

That is, the steam collecting pipe 29 constitutes a part of the droplet separation structure that separates the flow in the barrel 2 into a flow around the center of the barrel 2 and a flow around the inner surface of the barrel 2 and allows only the flow around the inner surface of the barrel 2 to descend along the outer surface of the barrel 2. As described above, the present embodiment has: the droplet separation structure, and a bubble separation structure including the water discharge pipe 28 and the flow path control ring 10. Therefore, it is possible to reduce the carry-under without increasing the carry-over by this fourth embodiment as in the first embodiment.

Further, the upper end of the steam collecting pipe 29 is connected to the transverse pipes 11. Thus, the flow around the center of the barrels including mainly steam and few droplets passes the steam collecting pipe 29 and the transverse pipes 11 to be discharged outside the barrel 2. As described above, as in the fourth embodiment, the steam that has flowed into the water discharge pipe 28 is discharged from the steam outlet at the upper end of the water discharge pipe 28 and the steam in the barrel 2 also passes through the transverse pipes 11 to be discharged outside the barrel 2. Thus, the flow rate of the steam ascending in the barrel 2 is reduced. As a result, the steam flow rate passing the pick-up ring in the barrel is reduced. Accordingly, the flow rate of the steam ascending in the barrel 2 is reduced. The reduction in the flow rate of the steam ascending in the barrel 2 reduces the amount of droplets carried upward to thereby reduce the carry-over.

According to the present embodiment, as in the first embodiment, the carry-over can be reduced, as well as the carry-over of droplets ascending in the barrel can be reduced. Further, unlike the first embodiment, the pick-off ring 1 and the annular body 41 do not protrude inside the barrel 2, so that it is possible to suppress the flow from being separated by edge portions of the above members. Thus, not only the centrifugally separated water but also the steam is removed, so that even if the steam flow rate in the entire plant is increased, the carry-over can be reduced.

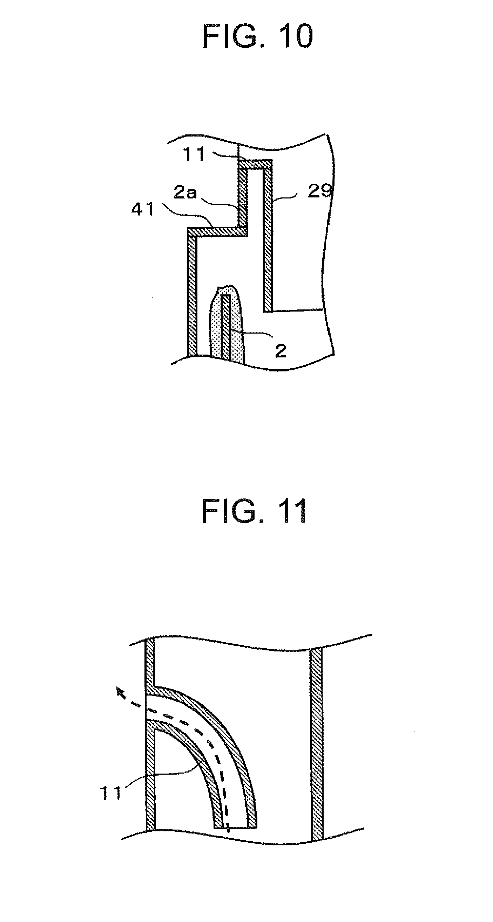

As a modification of the present embodiment, as illustrated in FIG. 10, the upper part 2a of the barrel located above the annular body 41 may be made smaller in diameter than the lower part of the barrel 2. With this configuration, in addition to the effects obtained by the present embodiment, it is possible to prevent small droplets 3 that have not been adhered to the inner surface of the barrel 2 from flowing upward.

### [OTHER EMBODIMENTS]

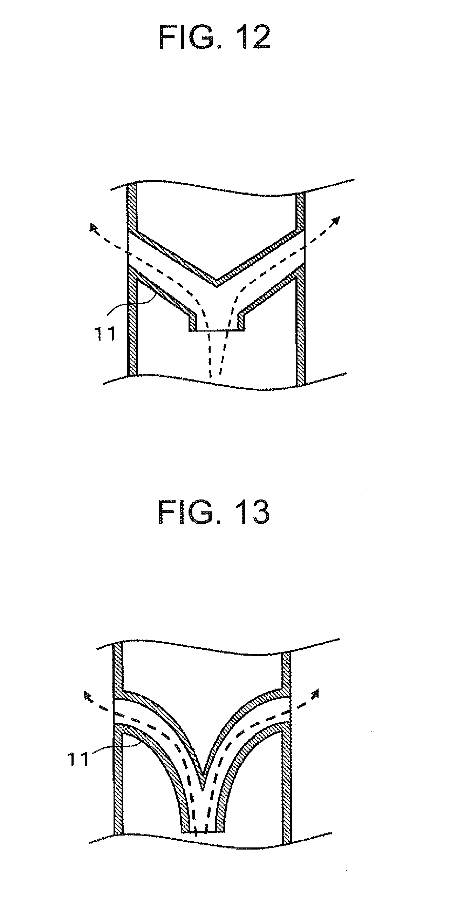

The above embodiments are merely illustrative, and do not limit the present invention. Further, the features of the embodiments may be combined. These novel embodiments can be practiced in other various forms, and various omissions, substitutions and changes may be made without departing from the scope of the invention. For example, although the gap 9 is opened upward in FIGS. 5 and 9, a configuration may be adopted in which the upper end of the gap 9 is closed and an opening is formed in the horizontal direction or in which a watershoot (not illustrated) protruding from the outer surface of the annular body 41 so as to cover over the gap 9. With this configuration, it is possible to prevent the water falling from the above from flowing into the gap 9. Further, for example, the transverse pipes 11 may be formed using a bent pipe such as an elbow pipe illustrated in FIG. 11, a substantially Y-shaped pipe illustrated in FIG. 12, or a substantially Y-shaped pipe having a round curve (curvature) illustrated in FIG. 13 so as to obtain a structure in which a pressure loss of the steam flow is reduced more. The embodiments and modifications thereof are included in the scope or spirit of the present invention and in the appended claims and their equivalents.

### EXPLANATION OF REFERENCE NUMERALS

1: pick-off ring; 2: barrel; 3: droplet; 5: liquid film; 8: swirler 9: gap; 11: transverse pipe; 16: reactor pressure vessel; 17: core; 18: stand pipe; 19: main steam pipe; 20: feed water pipe; 21: steam separator; 22: drier; 23: water flow; 24: steam flow; 25: shroud head; 26: water surface; 27: descending flow path formation pipe; 29: steam collecting pipe; 40: penetrating portion; 41: annular body; 50: shroud

## Claims

1. A steam separator comprising:
a barrel which is formed in a vertical tubular shape and inside which two-phase flow of steam and water flows upward;
a swirler which imparts a swirling force to the two-phase flow; and
a steam separation structure which separates the flow in the barrel into a flow around a center of the barrel and a flow around an inner surface of the barrel and guides the flow around the center outside the barrel.

2. The steam separator according to claim 1, wherein
the steam separation structure includes: a steam collecting pipe having an outer surface opposed to the inner surface of the barrel across a gap, and a transverse pipe making an inside of the steam collecting pipe and an outside of the barrel to communicate with each other.

3. The steam separator according to claim 1 or 2, comprising:
a droplet separation structure which separates the flow in the barrel into the flow around the inner surface of the barrel and the flow around the center of the barrel and allows the flow around the inner surface to descend along an outer surface of the barrel; and
a bubble separation structure having a water discharge flow path to which the descending flow is guided by the droplet separation structure, the water discharge flow path being formed so as to have a small flow path area having a cross sectional area smaller than that of a portion thereabove and a steam outlet opened above the small flow path area.

4. The steam separator according to claim 3, wherein
the bubble separation structure includes: a tubular water discharge pipe having an inner surface opposed to the outer surface of the barrel across a gap, and a flow path control ring protruding from the outer surface of the barrel toward the inner surface of the water discharge pipe to form the small flow path area.

5. The steam separator according to claim 3, wherein
the bubble separation structure includes a water discharge pipe having an inner surface opposed to the outer surface of the barrel across a gap which becomes smaller downward.

6. The steam separator according to claim 3, wherein
the droplet separation structure includes: a tubular pick-off ring having an outer surface opposed to the penetrating portion across a gap, an annular body extending outward from the outer surface of the pick-off ring, and a descending flow path formation pipe extending downward from the annular body and having an inner surface opposed to the outer surface of the barrel across a gap.

7. The steam separator according to claim 3, wherein
the steam separation structure includes: a steam collecting pipe having an outer surface opposed to the inner surface of the barrel across a gap, and a transverse pipe making inside of the steam collecting pipe and outside of the barrel to communicate with each other, and
the steam collecting pipe constitutes a part of the droplet separation structure.

8. The steam separator according to claim 3, wherein
the steam outlet has a water inflow prevention structure preventing water flowing down from the steam outlet from flowing into the water discharge flow path.

9. A nuclear reactor system comprising:
steam generation means for heating water by heat generated by nuclear fission to generate steam; and
a steam separator including: a barrel which is formed in a vertical tubular shape and inside which two-phase flow of steam and water sent from the steam generation means flows upward; a swirler which imparts a swirling force to the two-phase flow; and a steam separation structure which separates the flow in the barrel into a flow around a center of the barrel and a flow around an inner surface of the barrel and guides the flow around the center outside the barrel.
